# EUROPÄISCHE PATENTSCHRIFT

(11) **EP 1 018 060 B1**
(45) Veröffentlichungstag und Bekanntmachung des Hinweises auf die Patenterteilung: **29.05.2002**
(21) Anmeldenummer: 98966169.9
(22) Anmeldetag: 26.11.1998
(51) Int. Cl.: G05B 19/00

(54) **KLEINSTEUERUNG**
MINI CONTROLLER
MINI-AUTOMATE

(30) Priorität: 26.11.1997 DE 19752255
(43) Veröffentlichungstag der Anmeldung: 12.07.2000
(73) Patentinhaber: Moeller GmbH, 53115 Bonn (DE)
(72) Erfinder: HÖGENER, Jürgen, D-53859 Mondorf (DE); KRESS, Wolfram, D-53721 Siegburg (DE); DUNG, Olaf, D-53773 Hennef (DE)
(86) Internationale Anmeldenummer: DE9803488
(87) Internationale Veröffentlichungsnummer: WO9928794

(56) Entgegenhaltungen:
- EP-A- 0 092 312
- EP-A- 0 251 699
- EP-A- 0 435 188
- EP-A- 0 477 760
- WO-A-89/01201
- WO-A-97/09661
- US-A- 3 964 026
- US-A- 5 659 705
- PATENT ABSTRACTS OF JAPAN vol. 010, no. 288 (P-502), 30. September 1986 (1986-09-30) & JP 61 105605 A (FANUC LTD), 23. Mai 1986 (1986-05-23)
- PATENT ABSTRACTS OF JAPAN vol. 012, no. 071 (P-673), 5. März 1988 (1988-03-05) & JP 62 210572 A (TOSHIBA CORP), 16. September 1987 (1987-09-16)

## Beschreibung

Die vorliegende Erfindung betrifft eine Kleinsteuerung, insbesondere ein programmierbares und/oder parametrierbares Steuergerät wie ein Logikrelais, mit mindestens folgenden integrierten Einheiten: einer intelligenten Zentraleinheit, einer Speichereinheit, einer Bedieneinheit und einer Anzeigeeinheit, zur Durchführung von Automatisierungsprozessen.

Derartige Geräte sind bereits bekannt. Das Logikmodul der Firma Siemens (Handbuch LOGO!, 1996, Bestell-Nr. 6ED1 050 1AA00-0DE0) ist eine gattungsgemäße programmierbare Kleinsteuerung zur Bewältigung kleinerer Steuerungsaufgaben. Das Gerät weist ebenfalls die oben beschriebenen integrierten Einheiten auf. Hierbei ist von Nachteil, daß -aufgrund des Aufbaus des Gerätes- eine Programmierung lediglich auf sehr umständliche Art und Weise möglich ist. Die Programmierung erfolgt durch eine, für den Durchschnittsanwender derartiger Geräte fremde Art und Weise und zwar indem ein herkömmlicher Schaltplan zur Verdrahtung in Logiksymbole umgesetzt werden muß. Hierfür muß der Anwender jedoch erst einmal eine, für ihn gänzlich fremde und somit umständliche, Handhabung mit dem Gerät erlernen. Ferner ist von Nachteil, daß aufgrund der Symbolik -bei den nur sehr kleinen Displays derartiger Geräte- eine geringe Informationsdichte für den Anwender zur Verfügung steht.

Die US 3,964,026 offenbart ein Anzeigesystem für eine Steuerungsanlage. Hierbei findet neben einem Temporärspeicher für das Abbild der Anzeigeeinheit ein weiterer Speicher zur Sicherung der übrigen Prozess-Programm- und Betriebssystemdaten Verwendung. Hierdurch kann eine Daten- und Funktionssicherheit, wie sie für eine gattungsgemäße Steuerung erforderlich ist, nicht gewährleistet werden.

Die EP 0 435 188 A1 beschreibt ein System bestehend aus einem Verfahren zur Erzeugung und Abarbeitung von Programmen für industrielle Steuerungsprozesse und eine Vorrichtung zur Durchführung des Verfahrens.

Mit Vorteil wird um derartig umfangreiche Steuerungsaufgaben bewältigen zu können eine Personalcomputeranordnung mit separaten Speichermedien wie floppy-disc verwendet.

Ferner ist aus der EP 0251 699 A2 ein Verfahren zur Erzeugung von Logikdiagrammen bekannt. Dabei sind die Logikdiagramme aus einzelnen Funktionsbausteinen zusammensetzbar und in Logikgleichungen umsetzbar. Desweiteren ist eine Vorrichtung zur Durchführung des Verfahrens Gegenstand der Druckschrift. Bevorzugte Anwendung findet das Verfahren bei sicherheitsrelevanten Großanlagen wie Kernkraftwerken.

Der vorliegenden Erfindung liegt die Aufgabe zugrunde, eine gattungsgemäße Kleinsteuerung zu schaffen, die eine erhöhte Informationsdichte bietet, eine deutlich einfachere Bedienung des Gerätes ermöglicht und zugleich eine erhöhte Datensicherheit gewährleistet.

Erfindungsgemäß wird diese Aufgabe durch die Merkmale des Anspruchs 1 gelöst. Durch die feste Zuordnung bestimmter Objekttypen zu entsprechenden Zeichenplätzen der n∗m Zeichenmatrix der Anzeigeeinheit werden die Eingabevorgänge zur Bedienung des Gerätes für den Anwender innerhalb kürzester Zeit zur Routine. In einer bevorzugten Ausführungsform der Erfindung sind die einzelnen Objekttypen in Form von Schaltplansymbolen ausgebildet. Hierdurch wird auch dem ungeübten Benutzer des erfindungsgemäßen Gerätes eine intuitive Benutzung ermöglicht. Ein zeitaufwendiges Erlernen neuer Symbole und Programmiertechniken entfällt. Ein weiterer Vorteil ist die, durch die feste Einteilung der Anzeigeeinheit und die Einbindung von Schaltplansymbolen erreichte, hohe Informationsdichte. Desweiteren wird durch die Verwendung verschiedener Speicher für verschiedene Daten, ein Programmspeicher für das Betriebssystem, ein Speicher für das Anwenderprogramm und ein Speicher zur Hinterlegung der Eingabe- und Zustandsdaten während der Programmabarbeitung, die Datenund Funktionssicherheit der Steuerung gewährleistet.
Weitere Ausführungen und Vorteile der Erfindung sind in den Unteransprüchen und in der folgenden Figurenbeschreibung enthalten. Es zeigen:
- Fig.1: eine mögliche Ausführungsform des erfindungsgemäßen Steuergerätes in schematischer Darstellung,
- Fig.2a: die Aufteilung der Anzeigeeinheit des Gerätes gemäß Fig.1 in einer möglichen Ausführung, und
- Fig. 2b: die Anzeigeeinheit gemäß Fig.2 mit einer möglichen Ausgestaltung eines Programmpfades mit Schaltplansymbolen.

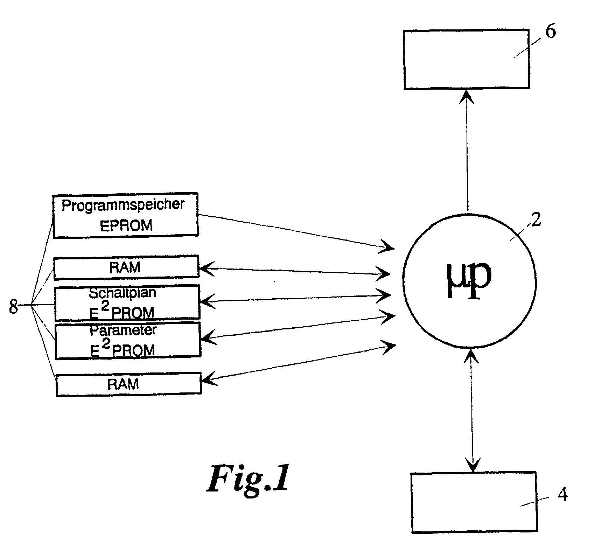

Die Fig.1 zeigt das erfindungsgemäße Steuergerät auf der Basis einer intelligenten Zentraleinheit 2, z.B. einem Mikroprozessor. Dabei übernimmt die Zentraleinheit 2 vorzugsweise die gesamte Steuerung und Kommunikation innerhalb des Gerätes. Zu den Hardware-Mindesterfordemissen sind darüber hinaus noch eine Bedieneinheit 4, eine Anzeigeeinheit 6 und eine Speichereinheit 8 erforderlich. Die genannten Komponenten sind alle in das Steuergerät integriert; ein zusätzliches Programmiergerät ist nicht mehr erforderlich. Die Bedieneinheit 4 besteht mit Vorteil aus lediglich vier Funktionstasten und vier Richtungstasten. Dabei sind zur Eingabe von Informationen (Programmcode in Form von Schaltplansymbolen oder deren Indizes oder dergleichen und/oder Parametern) die vier vorzugsweise mehrfach belegten Funktionstasten "MF", "DEL", "ESC" und "OK" vorgesehen. Zur Positionierung eines Cursors sind die vier als Pfeiltasten ausgebildeten und um 90° zueinander versetzt angeordneten Richtungstasten vorhanden.

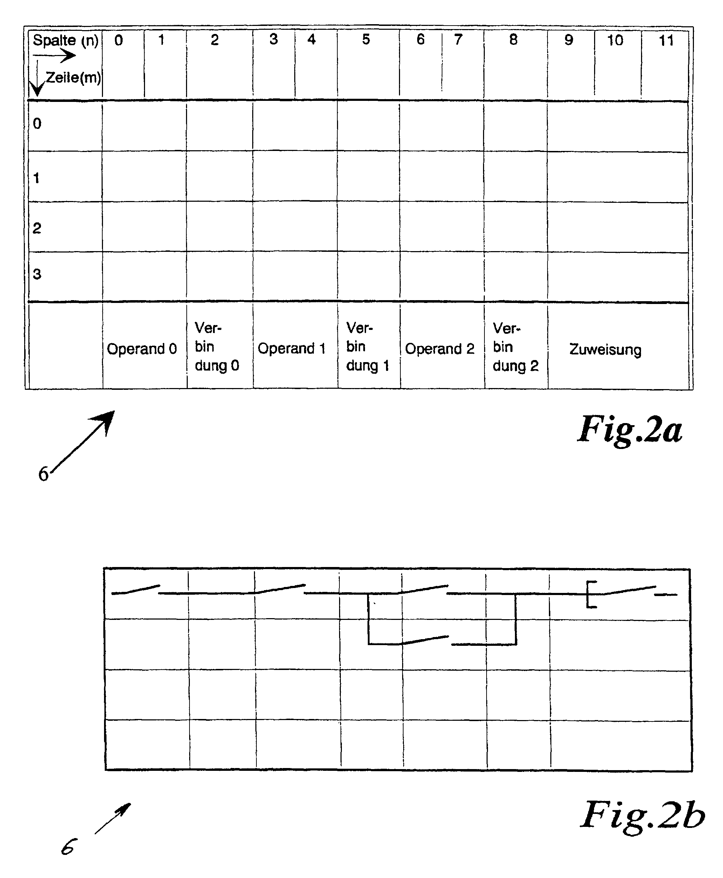

Die Anzeigeeinheit 6 besteht aus einer Zeichenmatrix mit n∗m (n=Zeilen, m=Spalten) Zeichenplätzen (vorzugsweise 4∗12 Zeichen s. Fig.2), wobei jedes Zeichen wiederum durch x∗y Pixel (hier 5∗8 Pixel) dargestellt wird. Die Speichereinheit 8 weist mindestens einen nichtflüchtigen und nicht beschreibbaren z.B. als EPROM (oder als eine im Herstellungsprozeß des Mikroprozessors gefertigte PROM-Maske) ausgebildeten Programmspeicher für das eigentliche Betriebssystem sowie einen nichtflüchtigen und beschreibbaren z.B. als E²PROM ausgebildeten Speicher zur Ablage für das Anwenderprogramm und zur Hinterlegung eingebbarer Parameter für Funktionsbausteine auf. Ferner weist die Speichereinheit 8 einen beschreibbaren Speicher (kann auch flüchtig sein) zur Hinterlegung der Eingabe- und Zustandsdaten (Eingangs-, Ausgangs-, Merker- und Funktionsbausteinzustände) in einer Objekt-Zuweisungs-Tabelle während der Programmabarbeitung auf. Weiterhin ist ein zusätzlicher, beschreibbarer Temporärspeicher (z.B. RAM) für das Abbild der Anzeigeeinheit 6 vorgesehen.

In den Fig.2a und 2b ist die Anzeigeeinheit 6 in ihrem Aufbau in schematischer Weise dargestellt, wobei diese vorzugsweise als LCD-Display ausgeführt und in eine 4∗12 Zeichenmatrix aufgeteilt ist. Mit dieser, insbesondere für Kleinsteuerungen geeigneten, Anzeigeeinheit 6 lassen sich vier Zeilen mit jeweils zwölf Zeichen darstellen. Dabei ist erfindungsgemäß jedem Zeichenplatz (bzw. einer Gruppe von Zeichenplätzen) der Anzeigeeinheit 6 ein bestimmter Objekttyp zugeordnet derart, daß lediglich bestimmte Objekttypen an bestimmten Zeichenplätzen eingebbar und verarbeitbar sind. Es sind Zeichenplätze für zumindest einen Operanden-, einen Verbindungs-, und einen Zuweisungsobjekttyp vorhanden, wobei der Operandenobjekttyp Operanden in Form von Eingängen, Ausgängen (z.B. in Form von Schaltplansymbolen und/oder deren Indizes) oder Funktionsbausteinen (parametrierbare und nicht parametrierbare) beinhaltet. Desweiteren ist ein Operand in Form einer Brücke vorgesehen, der auf Operanden-Zeichenplätzen eine Verbindung zwischen zwei Verbindungsobjekten realisiert. Die verschiedenen Verbindungsobjekte (des Verbindungsobjekttyps) sind in Form von geradlinigen Verbindungen, Kreuzungen, T-Verbindundungsstücken und dergleichen ausgebildet, während die Zuweisungsobjekte (des Zuweisungsobjekttyps) wiederum vorzugsweise als speziell gekennzeichnete Ausgänge, Eingänge, Merker oder dergleichen ausgebildet sind. Mit Vorteil sind alle Objekte des Operandenobjekttyps und des Zuweisungsobjekttyps als Öffner bzw. Schließer oder analog dazu als Bezeichnung derselben (Schaltplansymbolik) darstellbar. Jedem der Zeichenplätze bzw. Objekttypen ist eine beliebige Anzahl von zu verarbeitenden Bytes zuordenbar (Objekt-Zuweisungs-Tabelle). Die einzelnen Objekttypen (Bezeichnung und inhaltliche Daten) sowie die jeweils aktuellen Operandenzustände und die daraus resultierenden Verbindungszustände der einzelnen Verbindungspunkte zwischen den jeweiligen Operanden sind in einer Objekt-Zuweisungs-Tabelle hinterlegt. Dabei sind die Bezeichnungen der Objekttypen in Form von nicht veränderbaren, fest einzelnen Plätzen der Anzeigeeinheit 6 zugeordneten Daten hinterlegt, während alle zustandsabhängigen Daten (Operanden- und Verbindungszustände) als veränderbare Daten hinterlegt sind. Durch eine zeilen- und/oder spaltenweise Eingabe von Operanden-, Verbindungs- und Zuweisungsobjekten an den jeweils zugeordneten Zeichenplätzen sind einzelne, eine Logik bildende Strompfade realisierbar.
Im dargestellten Ausführungsbeispiel ist jede zwölfspaltige Zeile für sieben Objekttypen konzipiert. Dabei sind pro Zeile drei Operanden-, drei Verbindungs- und ein Zuweisungsobjekttyp vorgesehen. Die Operandenobjekttypen werden mit zwei Zeichen, die Verknüpfungsobjekttypen mit einem Zeichen und die Zuweisungsobjekttypen mit drei Zeichen auf der Anzeigeeinheit 6 dargestellt. Um eine derartige Positionsbindung der Objekttypen zu den Zeichenplätzen der Anzeigeeinheit 6 zu gewährleisten, sind den Spaltenpositionen jeder Zeile feste Strukturelemente in der Objekt-Zuweisungs-Tabelle, die sich vorzugsweise im RAM-Speicher befindet, zugeordnet. Aus dieser Tabelle, die aus der genannten Zeilenstruktur multipliziert mit der zugelassenen Anzahl der Zeilen (ergibt max. zulässige Größe des Anwenderprogramms) besteht, läßt sich eine 1:1-Zuordnung (Abbild) zu dem jeweiligen Zeileninhalt finden. Die Anzeigeeinheit dient dabei als vier Zeilen großes Fenster, das sich über die Objekt-Zuweisungs-Tabelle verschieben läßt (Scroll-Funktion). Die einzelnen Objekttypen sind vorzugsweise folgendermaßen den einzelnen Spalten jeder Zeile zugeordnet:

| | |
|---|---|
| Operandenobjekttyp | Operand 0 → Spalte 0, 1 |
| | Operand 1 → Spalte 3, 4 |
| | Operand 2 → Spalte 6, 7 |
| Verbindungsobjekttyp | Verbindung 0 → Spalte 2 |
| | Verbindung 1 → Spalte 5 |
| | Verbindung 2 → Spalte 8 |
| Zuweisungsobjekttyp | Zuweisung → Spalte 9, 10, 11 |

Die Zusammenhänge der einzelnen Objekttypen sind nun denkbar einfach. Bezüglich der Operanden gilt die Regel: Operand (n) in Spaltenposition n∗3 bis n∗3+1. Für die Verbindungen gilt die Regel: Verbindung (n) in Spaltenposition n∗3+2. Da nur ein Zuweisungsobjekt pro Zeile realisierbar ist, ist die Position mit den genannten Spalten 9, 10, 11 eindeutig vorgegeben. Für die Realisierung derartig aufgebauter Programmstrukturen ist eine "Stromversorgung" unabdingbar. Zu diesem Zweck ist in einer nicht dargestellten Spalte eine gedachte Stromschiene zur Bereitstellung eines logisch "1" - Versorgungssignals für die erste dargestellte Spalte (Spalte 0) in der Zeilenmatrix vorhanden (Fig. 2b).
Die einzelnen Objekttypen sind insbesondere wie folgt aufgebaut: Operandenobjekttyp - 2 Zeichen/1 Byte; Verbindungsobjekttyp - 1 Zeichen/1 Byte; Zuweisungsobjekttyp - 3 Zeichen/1 Byte. Durch diese feste Zuordnung der einzelnen Ressourcen wird der benötigte Speicherplatz minimiert. Bei z.B. einer Beschränkung auf dreißig Zeilen und einem Speicherplatzbedarf von z.B. einem Byte pro Objekttyp bedeutet dies einen tatsächlichen Speicherplatzbedarf von 30∗7 Byte=210 Byte. Dieser Grund-Speicherplatzbedarf erhöht sich bei der Verwendung von Funktionsbausteinen wie Zeitgliedern, Zählern, Uhrbausteinen und dergleichen entsprechend. Für die Verwendung von parametrierbaren Funktionsbausteinen ist eine zusätzliche Parametertabelle für die Hinterlegung der entsprechenden Parameter des jeweiligen Funktionsbausteins vorgesehen. Für die Programmierung und Anzeige werden jeweils nur die Ausgänge, d.h. die Öffner bzw. Schließer, der jeweiligen Funktionsbausteine eingegeben und entsprechend dargestellt.

## Patentansprüche

1. Programmierbare Kleinsteuerung zur Durchführung von Automatisierungsprozessen, insbesondere Logikrelais, mit folgenden in die Kleinsteuerung integrierten Bestandteilen:
- einer intelligenten Zentraleinheit (2),
- einer Speichereinheit (8),
- einer Bedieneinheit (4), und
- einer Anzeigeeinheit (6),
**dadurch gekennzeichnet, daß**
- die Anzeigeeinheit (6) in eine Zeichenmatrix von n ∗ m Zeichenplätzen aufgeteilt ist,
- jedem Zeichenplatz ein bestimmter Objekttyp mit einer festen Zeichenlänge zugeordnet ist, und
- die Zeichenplätze spaltenweise für einen Operanden-, einen Verbindungsund einen Zuweisungsobjekttyp vorhanden sind, und
- die Speichereinheit (8)
mindestens einen nichtflüchtigen und nicht beschreibbaren Programmspeicher für das Betriebssystem,
einen nichtflüchtigen und beschreibbaren Speicher zur Ablage für das Anwenderprogramm und zur Hinterlegung eingebbarer Parameter,
einen beschreibbaren Speicher zur Hinterlegung der Eingabe- und Zustandsdaten während der Programmabarbeitung sowie
einen zusätzlichen, beschreibbareren Temporärspeicher für das Abbild der Anzeigeeinheit (6) aufweist, wobei
- die unterschiedlichen Objekttypen derart miteinander verknüpfbar sind, daß auf der Anzeigeeinheit (6) Zeilen mit eine Logik bildenden Strompfaden entstehen, und das Abbild der Zeichenmatrix mittels der Zentraleinheit (2) abarbeitbar ist.

2. Kleinsteuerung nach Anspruch 1, **dadurch gekennzeichnet, daß** die Operandenobjekttypen in Form von Schaltplansymbolen ausgebildet sind.

3. Kleinsteuerung nach Anspruch 1, **dadurch gekennzeichnet, daß** die Operandenobjekttypen in Form von Schaltplansymbol-Bezeichnungen ausgebildet sind.

4. Kleinsteuerung nach einem der Ansprüche 1-3, **dadurch gekennzeichnet, daß** die Objekttypen eine Datenlänge von einem Byte aufweisen.

5. Kleinsteuerung nach einem der vorherigen Ansprüche, **dadurch gekennzeichnet, daß** die Anzeigeeinheit (6) einen sichtbaren Bereich von vier Zeilen aufweist.

6. Kleinsteuerung nach einem der vorherigen Ansprüche, **dadurch gekennzeichnet, daß** der Inhalt der Objekt-Zuweisungstabelle über den sichtbaren Bereich der Anzeigeeinheit (6) auf- und abrollbar ist.

7. Kleinsteuerung nach einem der vorherigen Ansprüche, **dadurch gekennzeichnet, daß** die Bedieneinheit (4) aus vier Positioniertasten und vier Funktionstasten besteht.

8. Kleinsteuerung nach einem der vorherigen Ansprüche, **dadurch gekennzeichnet, daß** durch die Verbindungsobjekte benachbarte Spalten und/oder benachbarte Zeilen logisch miteinander verbindbar sind.

9. Kleinsteuerung nach einem der vorherigen Ansprüche, **gekennzeichnet durch** eine Parametertabelle zur Hinterlegung der Parameter von Funktionsbausteinen.

10. Kleinsteuerung nach einem der vorherigen Ansprüche, **dadurch gekennzeichnet, daß** der Speicherbereich für die Anwenderprogramme als austauschbares Speichermodul ausgebildet ist.

## Claims

1. Programmable miniature controller for carrying out automation processes, in particular a logic relay, having the following components integrated in the miniature controller:
- an intelligent central unit (2),
- a memory unit (8),
- a control unit (4), and
- a display unit (6),
**characterized in that**
- the display unit (6) is subdivided into a character matrix with n ∗ m character locations
- each character location has a specific associated object type with a fixed character length, and
- the character locations are provided in columns for an operand object type, a connection object type and an assignment object type, and
- the memory unit (8)
has at least one non-volatile and read only program memory for the operating system,
a non-volatile and read/write memory for storing parameters which can be entered for the user program and for storage,
a read/write memory for storing the input and state data during program processing, and
an additional read/write temporary memory for the image on the display unit (6), in which case
- the various object types can be linked to one another such that lines with current paths that form logic are produced on the display unit (6), and the image of the character matrix can be processed by means of the central unit (2).

2. Miniature controller according to Claim 1, **characterized in that** the operand object types are in the form of circuit diagram symbols.

3. Miniature controller according to Claim 1, **characterized in that** the operand object types are in the form of circuit diagram symbol designations.

4. Miniature controller according to one of Claims 1 to 3, **characterized in that** the object types have a data length of one byte.

5. Miniature controller according to one of the preceding claims, **characterized in that** the display unit (6) has a visible area of four lines.

6. Miniature controller according to one of the preceding claims, **characterized in that** the contents of the object assignment table can be scrolled up and down across the visible area of the display unit (6).

7. Miniature controller according to one of the preceding claims, **characterized in that** the control unit (4) comprises four positioning keys and four function keys.

8. Miniature controller according to one of the preceding claims, **characterized in that** the connection objects make it possible to logically link adjacent columns and/or adjacent lines to one another.

9. Miniature controller according to one of the preceding claims, **characterized by** a parameter table for storing the parameters of function modules.

10. Miniature controller according to one of the preceding claims, **characterized in that** the memory area for the user program is in the form of a replaceable memory module.

## Revendications

1. Commande miniature programmable pour exécuter des procédés d'automatisation, notamment des relais logiques, avec les composants suivants intégrés dans la commande miniature:
- une unité centrale intelligente (2),
- une unité de mémorisation (8),
- une unité de commande (4), et
- une unité d'affichage (6),
**caractérisée en ce que**
- l'unité d'affichage (6) est organisée en une matrice de caractères comprenant n x m emplacements de caractère,
- un type d'objet donné ayant une longueur de caractère fixe est associé à chaque emplacement de caractère, et
- les emplacements de caractère sont présents par colonnes pour un type d'objet opérande, liaison et attribution, et
- l'unité de mémorisation (8) présente
au moins une mémoire de programme non volatile et non inscriptible pour le système d'exploitation,
une mémoire non volatile et inscriptible pour le stockage du programme de l'utilisateur et l'enregistrement des paramètres pouvant être saisis,
une mémoire inscriptible pour l'enregistrement des données de saisie et d'état pendant l'exécution du programme et
une mémoire temporaire inscriptible supplémentaire pour l'image de l'unité d'affichage (6),
- les différents types d'objets pouvant être liés entre eux de manière à produire sur l'unité d'affichage (6) des lignes avec des trajets de courant formant une relation logique et l'image de la matrice de caractères pouvant être traitée à l'aide de l'unité centrale (2).

2. Commande miniature selon la revendication 1, **caractérisée en ce que** les types d'objet opérandes sont représentés sous la forme de symboles de schéma électrique.

3. Commande miniature selon la revendication 1, **caractérisée en ce que** les types d'objet opérandes sont représentés sous la forme de désignations de symboles de schéma électrique.

4. Commande miniature selon les revendications 1 à 3, **caractérisée en ce que** les types d'objet présentent une longueur d'un octet.

5. Commande miniature selon l'une des revendications précédentes, **caractérisée en ce que** l'unité d'affichage (6) présente une zone visible de quatre lignes.

6. Commande miniature selon l'une des revendications précédentes, **caractérisée en ce que** le contenu du tableau des attributions des objets peut défiler dans un sens ou dans l'autre sur la zone visible de l'unité d'affichage (6).

7. Commande miniature selon l'une des revendications précédentes, **caractérisée en ce que** l'unité de commande (4) se compose de quatre touches de positionnement et de quatre touches de fonction.

8. Commande miniature selon l'une des revendications précédentes, **caractérisée en ce que** les colonnes voisines et/ou les lignes voisines peuvent être reliées entre elles de manière logique à l'aide des objets de liaison.

9. Commande miniature selon l'une des revendications précédentes, **caractérisée par** un tableau des paramètres destiné à recevoir les paramètres des composants fonctionnels.

10. Commande miniature selon l'une des revendications précédentes, **caractérisée en ce que** la zone de mémorisation pour les programmes de l'utilisateur est réalisée sous la forme d'un module de mémorisation interchangeable.
